# EUROPÄISCHE PATENTANMELDUNG

(11) **EP 0 761 407 A1**
(43) Veröffentlichungstag der Anmeldung: **12.03.1997**
(21) Anmeldenummer: 96109854.8
(22) Anmeldetag: 19.06.1996
(51) Int. Cl.: B29C 45/17

(54) **Verfahren und Vorrichtung zum Herstellen von Kunststoffgegenständen mit massiven Stellen und Hohlstellen**

(30) Priorität: 31.08.1995 DE 19532243
(71) Anmelder: Battenfeld GmbH, D-58540 Meinerzhagen (DE)
(72) Erfinder: Eckardt, Helmut, 58540 Meinerzhagen (DE); Ehritt, Jürgen, 57271 Hilchenbach (DE); Seuthe, Alfons, 58540 Meinerzhagen (DE); Gosdin, Michael, Dr., 58540 Meinerzhagen (DE)
(74) Vertreter: Gosdin, Michael, Dr.

(57) **Zusammenfassung**

Die Erfindung bezieht sieh auf ein Verfahren und eine Vorrichtung zum Herstellen von Kunststoffgegenständen mit massiven Stellen und Hohlstellen. Das Verfahren weist die Schritte auf: a) Absperren eines Teils der Kavität (2) eines Formwerkzeugs (1), so daß in den abgesperrten Bereich (8) keine Kunststoffschmelze gelangen kann; b) Einspritzen von Kunststoffschmelze in den nicht abgesperrten Bereich (9) der Kavität (2) des Formwerkzeugs (1); c) Öffnen der Absperrung, so daß Kunststoffschmelze in den bisher abgesperrten Bereich (8) der Kavität (2) gelangen kann; d) Eingeben eines Druckgases in die Schmelze mittels mindestens einer Fluideinspritzdüse (7), so daß die ins Formwerkzeug eingebrachte Schmelze unter Hohlraumbildung in gewünschten Bereichen der Kavität (2) verteilt und an die Kavitätswandungen des Formwerkzeugs (1) angepreßt wird; e) Abkühlenlassen des Formteils (6); f) Entlastung der Kavität (2) vom Druck des Druckfluids; und g) Entformen des Formteils. Vorteilhafterweise wird damit erreicht, daß sich in vorbestimmbarer Weise massive Stellen und Hohlstellen im Formteil ausbilden.

## Beschreibung

Die Erfindung betrifft ein Verfahren zum Herstellen von Kunststoffgegenständen mit massiven Stellen und Hohlstellen im sog. Gasinnendruck-Verfahren. Des weiteren betrifft die Erfindung eine Vorrichtung zur Durchführung des Verfahrens.

Ein solches Produktionsverfahren für Kunststoff-Formteile ist beispielsweise aus der US 4,101,617 bekannt. Ein Spritzgießwerkzeug hat eine Kavität, deren Wandungen die Oberfläche des zu produzierenden Teils definiert. In das geschlossene Werkzeug wird Kunststoffschmelze eingespritzt, die von einer Kunststoffplastifiziereinheit stammt, die mittels einer Kunststoffeinspritzdüse mit dem Werkzeug verbunden ist. Noch bevor die Kunststoffschmelze erhärtet, wird ein Druckfluid, insbesondere unter Druck stehender gasförmiger Stickstoff, ins Innere der Kunststoffschmelze injiziert, so daß die Schmelze unter Hohlraumbildung an die Kavitätswand gepreßt wird. Der Gasdruck wird bis zum Auskühlen des Formteils aufrechterhalten, wobei vorteilhafterweise erreicht wird, daß das zu produzierende Formteil leichter ist, weniger Kunststoffmasse für seine Herstellung benötigt wird und seine Oberfläche besonders gut ist, da abkühlungsbedingte Kontraktionen des Werkstoffs durch den Gasinnendruck ausgeglichen und Einfallstellen an der Formteil-Oberfläche verhindert werden.

In dieser US 4,101,617 ist der einfache Fall dargestellt, daß das herzustellende Formteil im wesentlichen einem Quader entspricht, der durch das Gasinnendruck-Verfahren als Hohlteil ausgebildet werden soll. Analog dazu kann das Verfahren aber auch eingesetzt werden, wenn komplexere Formteile produziert werden sollen, die sowohl Bereiche aufweisen, die Hohlstellen haben, als auch solche, die massiv aus Kunststoff sein sollen.

Ein Problem stellt dabei der Umstand dar, daß - unabhängig davon, ob ein bestimmtes Volumen Gas oder Gas unter definiertem Druck injiziert wird - die sich ausbildende innere Gasblase, d. h. der Hohlraum im Inneren des Formkörpers, schwierig reproduzierbar ist. Es ist nicht ausgeschlossen, daß sich bei einem "Schuß" der Hohlraum größer als bei einem anderen gestaltet, obwohl dieselben Prozeßparameter zugrundegelegt worden sind. Diese Parameter sind stets nur im Rahmen einer gewissen Schwankungsbreite konstant zu halten. Die aus dieser Schwankungsbreite resultierenden Ungleichförmigkeiten führen zu unterschiedlich ausgeformten Hohlstellen im Werkstück. Das hat insbesondere bei solchen Teilen einen negativen Einfluß zur Folge, bei denen die Größe des durch das Gasinnendruck-Verfahren hergestellten Hohlraums genau definiert ist, weil einerseits gewisse Bereiche aus Festigkeitsgründen massiv, andere jedoch aus Gewichtsgründen hohl sein müssen.

Der vorliegenden Erfindung liegt daher die **Aufgabe** zugrunde, ein Verfahren und eine zugehörige Vorrichtung vorzuschlagen, mit der es möglich ist, im Gasinnendruck-Verfahren Formteile herzustellen, die aneinandergrenzende Bereiche haben sollen, die einerseits massiv und andererseits als Hohlkörper ausgebildet sind. Dabei soll Wert auf eine zuverlässige und reproduzierbare Arbeitsweise gelegt werden.

Die **Lösung** der Aufgabe durch die Erfindung ist ein Verfahren, das die folgenden Schritte aufweist:
a) Absperren eines Teils der Kavität (2) eines Formwerkzeugs (1), so daß in den abgesperrten Bereich (8) keine Kunststoffschmelze gelangen kann;
b) Einspritzen von Kunststoffschmelze in den nicht abgesperrten Bereich (9) der Kavität (2) des Formwerkzeugs (1) entlang eines Schmelzefließwegs, der sich von einer Kunststoffplastifiziereinheit (4, 5) durch eine Kunststoffeinspritzdüse (3) bis ins Formwerkzeug (1) erstreckt;
c) Öffnen der Absperrung, so daß Kunststoffschmelze in den bisher abgesperrten Bereich (8) der Kavität (2) gelangen kann;
d) Gleichzeitig mit und/oder anschließend an das Einspritzen von Kunststoffschmelze Eingeben eines Druckfluids, insbesondere Druckgases, in die Schmelze mittels mindestens einer Fluideinspritzdüse (7), so daß die ins Formwerkzeug eingebrachte Schmelze unter Hohlraumbildung in gewünschten Bereichen der Kavität (2) verteilt und an die Kavitätswandungen des Formwerkzeugs (1) angepreßt wird;
e) Abkühlenlassen des so hergestellten Formteils (6) auf eine Temperatur unterhalb des Schmelzpunkts der Kunststoffschmelze;
f) Entlastung der Kavität (2) vom Druck des Druckfluids und
g) Entformen des Formteils.

Das Verfahren zeichnet sich also dadurch aus, daß zunächst ein abgeteilter Bereich des Formteils bzw. der Kavität von der Füllung mit Schmelze ausgenommen bleibt, während ein anderer Bereich gefüllt wird. Erst nach dem Aufheben der Abteilung gelangt dann Schmelze in jenen Bereich des Formteils bzw. der Kavität, der massiv ausgebildet werden soll. Das Umverteilen von Schmelze in den jetzt erst freigegebenen Bereich der Kavität erfolgt, indem Druckgas in die Schmelze injiziert wird, die sich im zunächst gefüllten Bereich befindet.

Daraus ergibt sich die vorteilhafte Wirkung, daß ohne jedes weitere Hilfsmittel - mit Ausnahme eines Absperrelements im Werkzeug - und lediglich unter Einsatz derjenigen Schmelzemenge, die für die Ausbildung des Formteils notwendig ist, ein Werkstück gefertigt werden kann, das bezüglich der Ausbildung des Hohlraums genau definiert werden kann.

Vorteilhafterweise ist das Verfahren weiterhin dadurch gekennzeichnet, daß Kunststoffschmelze gemäß Schritt b) des beschriebenen Verfahrens solange eingespritzt wird, bis der nicht abgesperrte Bereich (9) der Kavität (2) vollständig mit Kunststoffschmelze gefüllt ist. Weiterhin kann vorgesehen werden, daß das Absperren gemäß Schritt a) des beschriebenen Verfahrens nicht vollständig erfolgt, sondern zwecks Vermeidung von Umschaltmarkierungen am Formteil (6) bereits während Schritt b) ein geringfügiger Teil Kunststoffschmelze in den abgesperrten Bereich (8) eindringen kann.

Das Absperren und das Öffnen des Teils der Kavität (2) kann dabei gesteuert oder geregelt vorgenommen werden. Es erfolgt dabei vorteilhafterweise dadurch, daß es in Abhängigkeit von der Zeit nach Beginn des Spritzgießzyklus oder in Abhängigkeit vom Druck in der Kavität (2) stattfindet.

Schließlich kann vorgesehen werden, daß der Bereich der Absperrung zur Vermeidung von Einfrierungen beheizt wird.

Die Vorrichtung zur Durchführung des Verfahrens weist folgende Elemente auf:
- ein aus mindestens zwei Hälften bestehendes Formwerkzeug (1) mit einer Kavität (2),
- eine Kunststoffplastifiziereinheit (4, 5) und eine Kunststoffeinspritzdüse (3) und
- mindestens eine Fluideinspritzdüse (7).

Erfindungsgemäß sind Mittel (10) zum weitgehenden Absperren eines Teils der Kavität (2) vorgesehen. Diese Mittel (10) können ein Schieberelement aufweisen, das zwecks Absperrung in die Kavität (2) hineingeschoben und zwecks Öffnen aus ihr wieder herausgezogen wird.

Gemäß einer Weiterbildung ist vorgesehen, daß die Mittel (10) zum Absperren eines Teils der Kavität (2) durch Steuer- oder Regelmittel beeinflußt werden. Schließlich können Heizmittel (11) zum Beheizen des Bereichs der Mittel (10) zum weitgehenden Absperren eines Teils der Kavität (2) vorgesehen werden, um den Prozeß zu stabilisieren.

In der Zeichnung ist ein erfindungsgemäßes Ausführungsbeispiel dargestellt:
- Figur 1: zeigt eine Ansicht eines Formteils, das mit dem erfindungsgemäßen Verfahren hergestellt werden soll. In
- Figur 2: ist eine Spritzgießvorrichtung für die Herstellung dieses Teils dargestellt, wobei ein erster Prozeßzustand skizziert ist.
- Figur 3: zeigt dieselbe Spritzgießvorrichtung zu einem späteren Zeitpunkt im Prozeßverlauf.
- Figur 4: stellt ein anderes Formteil dar, das mit dem erfindungsgemäßen Verfahren hergestellt worden ist.

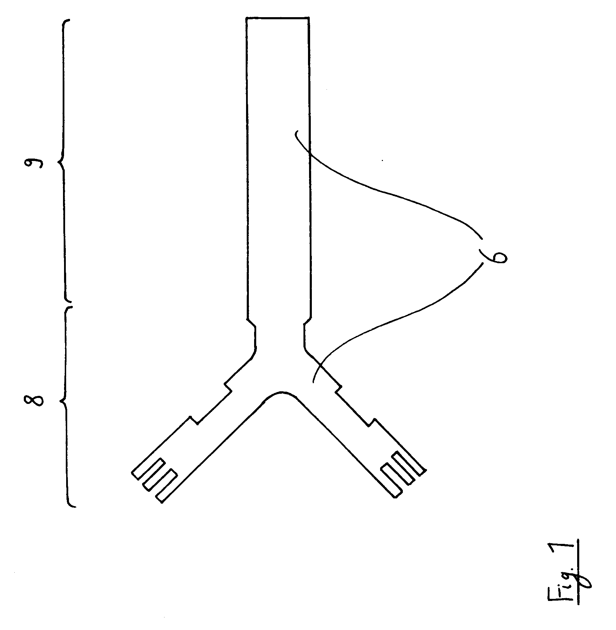

In der Figur 1 ist ein Formteil 6 zu sehen, das mit dem Gasinnendruck-Verfahren hergestellt werden soll. Es besteht aus zwei Bereichen, nämlich aus einem Bereich 8, der zwei i. wes. rechtwinklig zueinander angeordnete Schenkel aufweist, und einem Bereich 9, der länger und etwas breiter ausgebildet ist.

Die beiden Schenkel des Bereichs 8 dienen der Befestigung des Formteils 6 in zwei entsprechenden - nicht dargestellten - Halterungen. Das Formteil 6 muß bezüglich der beiden Halterungen Kräfte übertragen; es muß daher im Bereich 8 aus Festigkeitsgründen massiv ausgebildet sein.

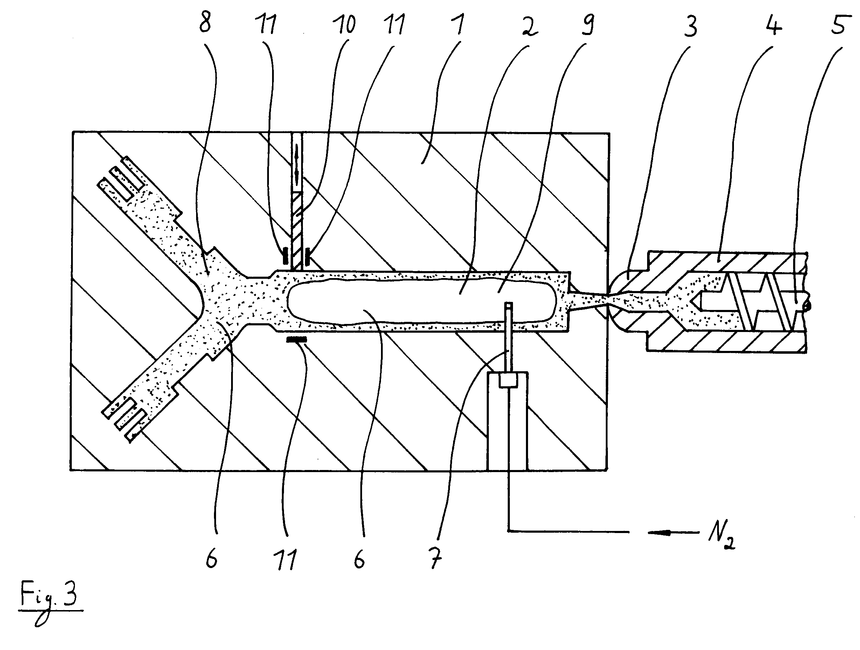

Der längliche Bereich 9 des Formteils 6 hat hingegen nur eine untergeordnete Bedeutung in bezug auf das Übertragen von Kräften. Hingegen liegt es im fertig montiertem Zustand im Sichtbereich der späteren Anwendung und muß daher bezüglich seiner Oberflächenbeschaffenheit gut sein. Aus diesem Grunde und deshalb, weil kein unnötiges Kunststoffmaterial verarbeitet werden und weil das Formteil 6 insgesamt möglichst leicht sein soll, ist der Bereich 9 des Formteils 6 hohl herzustellen. Die gewünschte Innen-Kontur des Formteils geht aus Figur 3 hervor, in der das Formteil im Schnitt zu sehen ist: Ein Hohlraum erstreckt sich i. wes. über den gesamten Teil des Bereichs 9.

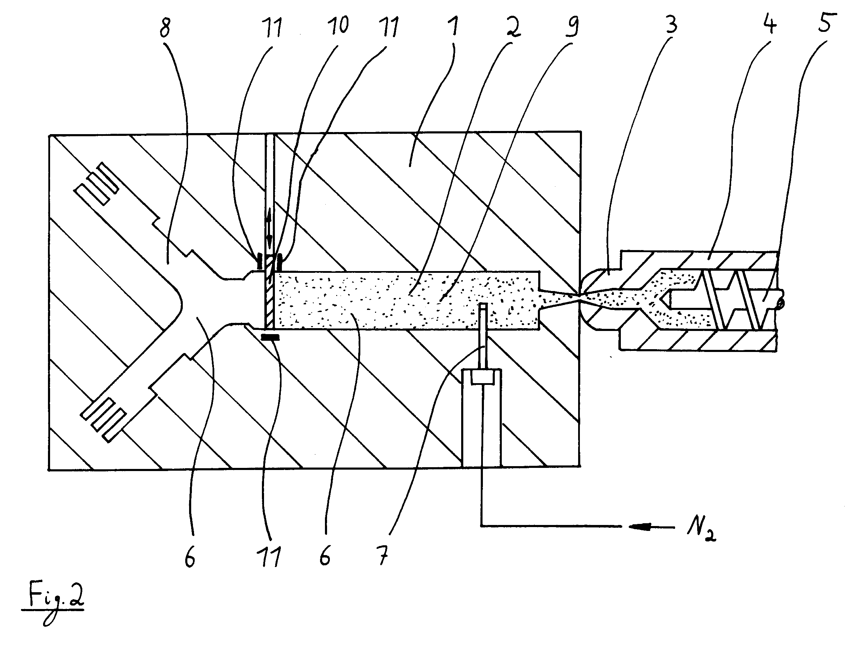

In Figur 2 ist die erfindungsgemäße Spritzgießvorrichtung schematisch dargestellt. Das Formwerkzeug 1 hat eine Kavität 2, die mit Ihren Wandungen die Kontur des herzustellenden Formteils 6 bestimmt. In die Kavität 2 wird Kunststoffschmelze eingespritzt. Diese stammt aus einer Kunststoffplastifiziereinheit 4, 5, die aus einem Schneckenzylinder 4 besteht, in dem sich rotatorisch und translatorisch eine Schnecke 5 bewegt. Die plastifizierte Schmelze gelangt über eine Kunststoffeinspritzdüse 3 in die Kavität 2.

Zur Injektion von Druckfluid, insbesondere Druckgas (Stickstoff) aus einer nicht dargestellten entsprechenden Versorgungseinheit, ins Innere der noch flüssigen Kunststoffschmelze ist eine Fluideinspritzdüse 7 vorgesehen. Diese ist im vorliegenden Fall entlang ihrer Längsachse beweglich angeordnet, so daß sie zwecks Entformung des fertigen Formteils 6 aus der Kavität 2 herausgezogen werden kann (die hierfür notwendigen Mittel sind nicht dargestellt). Gezeigt ist die Position, in der Druckgas in die Schmelze injiziert wird. Das Gas verteilt die Schmelze in der Kavität 2 und drückt sie an die Wandungen der Kavität 2 bzw. des Werkzeugs 1. Die Fluideinspritzdüse 7 kann im Rahmen der Funktionstüchtigkeit des erfindungsgemäßen Verfahrens an einer beliebigen Stelle des Werkzeugs angebracht werden; sie kann z. B. auch konzentrisch mit der Kunststoffeinspritzdüse 3 angeordnet sein, wodurch Schmelze und Fluid durch dieselbe Werkzeugöffnung eingegeben werden. Anstelle der direkt in die Kavität ragenden Fluideinspritzdüse können also alternativ oder additiv auch andere bekannte Begasungselemente vorgesehen sein, z. B. Fluiddüsen, die in die Kunststoffeinspritzdüse 3 oder in den Anguß integriert sind. Sinnvoll kann es auch sein, mehrere Fluideinspritzdüsen 7 zu verwenden.

Der Bereich 8 des Formteils, der i. wes. massiv ausgebildet, und der Bereich 9, der i. wes hohl geformt werden soll, grenzen an einer Stelle aneinander, an der ein Schieber 10 (Mittel zum Absperren eines Teils der Kavität) angeordnet ist. Dieser kann wahlweise so betätigt werden, daß er entweder in die Kavität 2 hineinragt oder aus ihr herausgezogen ist. Dies ist durch den Doppelpfeil oberhalb des Schiebers 10 angedeutet, wenngleich die Mittel, die den Schieber bewegen, nicht dargestellt worden sind.

Heizmittel 11 sind im Bereich des Schiebers 10 angeordnet. Mit diesen wird sichergestellt, daß es zu keinen "Einfrierungen" im Bereich des Schiebers 10 kommt, daß dort also die Schmelze nicht unter ihren Erstarrungspunkt abkühlt.

Das erfindungsgemäße Fertigungsverfahren läuft wie folgt ab:

Zunächst wird der Schieber 10 in die Position gebracht, in der er einen Teil der Kavität 2 absperrt, nämlich den Bereich 8 des Formteils 6; er befindet sieh dann in der in Figur 2 dargestellten Position. Dann wird mittels der Kunststoffplastifiziereinheit 4, 5 Schmelze in die Kavität gespritzt. Diese kann wegen des Schiebers 10 nur den Bereich 9 der Kavität 2 bzw. des Formteils 6 füllen, wie es in Figur 2 zu sehen ist. Der nicht abgesperrte Bereich 9 wird dabei vorzugsweise zunächst vollständig mit Schmelze gefüllt (s. Figur 2). Es kann alternativ jedoch auch vorgesehen werden, daß bereits während des Einspritzens von Schmelze Druckgas mittels der Fluideinspritzdüse 7 inzijiert wird, so daß sich bereits ein Hohlraum im Schmelzeinneren bildet.

Wenn der Bereich 9 vollständig mit Schmelze gefüllt ist bzw. wenn zyklusgemäß genug Schmelze eingespritzt worden ist, wird der bislang abgesperrte Bereich 8 der Kavität 2 bzw. des Formteils 6 freigegeben; der Schieber 10 wird angehoben und befindet sich dann in der in Figur 3 dargestellten Position.

Vorzugsweise setzt in diesem Moment die Injektion von Druckgas über die Fluideinspritzdüse 7 ein. Dadurch wird noch flüssiges Kunststoffmaterial unter Hohlraumbildung im Bereich 9 in den Bereich 8 verdrängt, der sich daraufhin vollständig mit Schmelze füllt. Der Zeitpunkt des Beginns der Gasinjektion kann jedoch auch schon vor oder erst nach dem Öffnen des Schiebers 10 liegen.

Erfindungswesentlich ist in jedem Fall, daß ein wesentlicher Teil des Formteil- bzw. Kavitätsvolumens vor der Schmelzeeinspritzung abgesperrt und ein anderer wesentlicher Teil des Volumens mit Schmelze - zumindest teilweise - gefüllt wird. Erst dann wird die Absperrung aufgehoben, so daß in den bislang abgesperrten Teilbereich Schmelze gelangen kann; ein Teil der Antriebskraft für das Austreiben der Schmelze in den bislang abgesperrten Bereich stammt von dem in den nicht abgesperrten Bereich injizierten Druckfluid.

Es kann vorgesehen werden, daß der Schieber 10 so in die Kavität 2 geschoben wird, daß er keine vollständige Absperrung bewirkt, sondern vielmehr ein geringfügiger Teil Schmelze auch schon vor dem Zurückziehen des Schiebers 10 in den abgesperrten Bereich gelangen kann. Damit wird erreicht, daß nicht die Gefahr besteht, daß sich am Ansatzpunkt des unteren Teils des Schiebers 10 an der entsprechenden Stelle der Kavitätswandung eine Umschaltmarkierung ergibt, also eine Markierung, die am späteren Formteil 6 zu einer nicht einwandfreien Oberfläche führt.

Wesentlich ist in allen Fällen lediglich, das die Mittel zum Absperren eines Teils der Kavität (Schieber 10) funktionell Mittel darstellen, mit denen ein Strömungswiderstand im Inneren der Kavität gegen den Fluß von Kunststoffschmelze erzeugt wird. Damit wird erreicht, daß sich in einem ersten Prozeßschritt zunächst Kunststoffschmelze in einem Bereich 9 sammelt, bevor - nach Aufhebung des Strömungswiderstandes - selbige auch in den Bereich 8 gelangen kann.

Die Betätigung der Mittel zur Erzeugung des Strömungswiderstandes in der Kavität kann gesteuert oder geregelt werden. D. h. der Schieber 10 kann durch entsprechende - nicht dargestellte - Stellelemente abhängig von gemessenen Prozeßgrößen (z. B. Druck in der Kavität 2) oder in Abhängigkeit von vorgegebenen Parametern (z. B. Ablauf einer definierten Zeit seit Zyklusbeginn) betätigt werden.

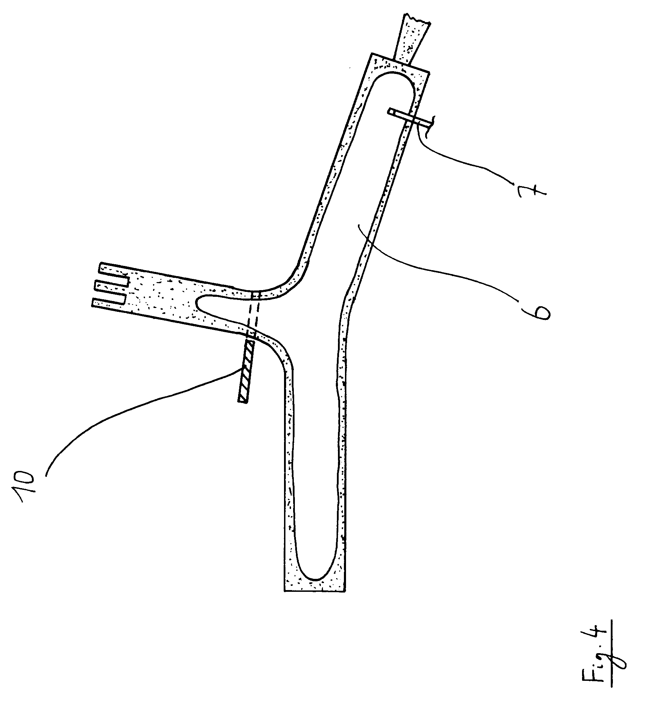

In Figur 4 ist ein anderes Formteil 6 zu sehen, das mit dem erfindungsgemäßen Verfahren hergestellt worden ist. Die gewählte Schnittdarstellung zeigt, wie sich in diesem Falle der Hohlraum im Inneren des Formteils 6 ausgebildet hat. Dieses Beispiel zeigt, daß der Schieber 10 nicht notwendigerweise die Trennung zwischen dem Formteil-Bereich darstellen muß, der massiv ausgebildet sein soll, und demjenigen, der hohl ist. Im vorliegenden Falle ist die Gasblase - nach Freigabe des entsprechend abgesperrten Kavitätbereichs durch den Schieber 10 - vielmehr auch in den Bereich eingedrungen, der zunächst abgesperrt war. Alternativ dazu - dieser Fall ist jedoch nicht dargestellt - können auch erhebliche Teile des zunächst nicht abgesperrten Bereichs massiv ausgebildet werden.

### Bezugszeichenliste:

- 1: Formwerkzeug
- 2: Kavität des Formwerkzeugs
- 3: Kunststoffeinspritzdüse
- 4: Schneckenzylinder
- 5: Schnecke
- 4, 5: Kunststoffplastifiziereinheit
- 6: Formteil
- 7: Fluideinspritzdüse
- 8: zunächst abgesperrter Bereich des Formteils bzw. der Kavität
- 9: nicht abgesperrter Bereich des Formteils bzw. der Kavität
- 10: Mittel zum Absperren eines Teils der Kavität; Schieber
- 11: Heizmittel

## Patentansprüche

1. Verfahren zum Herstellen von Kunststoffgegenständen mit massiven Stellen und Hohlstellen, das die Schritte aufweist:
a) Absperren eines Teils der Kavität (2) eines Formwerkzeugs (1), so daß in den abgesperrten Bereich (8) keine Kunststoffschmelze gelangen kann;
b) Einspritzen von Kunststoffschmelze in den nicht abgesperrten Bereich (9) der Kavität (2) des Formwerkzeugs (1) entlang eines Schmelzefließwegs, der sich von einer Kunststoffplastifiziereinheit (4, 5) durch eine Kunststoffeinspritzdüse (3) bis ins Formwerkzeug (1) erstreckt;
c) Öffnen der Absperrung, so daß Kunststoffschmelze in den bisher abgesperrten Bereich (8) der Kavität (2) gelangen kann;
d) Gleichzeitig mit und/oder anschließend an das Einspritzen von Kunststoffschmelze Eingeben eines Druckfluids, insbesondere Druckgases, in die Schmelze mittels mindestens einer Fluideinspritzdüse (7), so daß die ins Formwerkzeug eingebrachte Schmelze unter Hohlraumbildung in gewünschten Bereichen der Kavität (2) verteilt und an die Kavitätswandungen des Formwerkzeugs (1) angepreßt wird;
e) Abkühlenlassen des so hergestellten Formteils (6) auf eine Temperatur unterhalb des Schmelzpunkts der Kunststoffschmelze;
f) Entlastung der Kavität (2) vom Druck des Druckfluids; und
g) Entformen des Formteils.

2. Verfahren nach Anspruch 1, dadurch gekennzeichnet, daß Kunststoffschmelze gemäß Schritt b) von Anspruch 1 solange eingespritzt wird, bis der nicht abgesperrte Bereich (9) der Kavität (2) vollständig mit Kunststoffschmelze gefüllt ist.

3. Verfahren nach Anspruch 1 oder 2, dadurch gekennzeichnet, daß das Absperren gemäß Schrift a) von Anspruch 1 nicht vollständig erfolgt und zwecks Vermeidung von Umschaltmarkierungen am Formteil (6) bereits während Schritt b) gemäß Anspruch 1 ein geringfügiger Teil Kunststoffschmelze in den abgesperrten Bereich (8) eindringen kann.

4. Verfahren nach einem der Ansprüche 1 bis 3, dadurch gekennzeichnet, daß das Absperren und Öffnen eines Teils der Kavität (2) gesteuert oder geregelt wird.

5. Verfahren nach Anspruch 4, dadurch gekennzeichnet, daß das Absperren und/oder Öffnen eines Teils der Kavität (2) in Abhängigkeit von der Zeit nach Beginn des Spritzgießzyklus und/oder in Abhängigkeit vom Druck in der Kavität (2) gesteuert oder geregelt wird.

6. Verfahren nach einem der Ansprüche 1 bis 5 dadurch gekennzeichnet, daß der Bereich der Absperrung zur Vermeidung von Einfrierungen beheizt wird.

7. Vorrichtung zur Durchführung des Verfahrens nach einem der Ansprüche 1 bis 6, die aufweist:
- ein aus mindestens zwei Hälften bestehendes Formwerkzeug (1) mit einer Kavität (2),
- eine Kunststoffplastifiziereinheit (4, 5) und eine Kunststoffeinspritzdüse (3) und
- mindestens eine Fluideinspritzdüse (7),
**gekennzeichnet durch**
Mittel (10) zum weitgehenden Absperren eines Teils der Kavität (2).

8. Vorrichtung nach Anspruch 7, dadurch gekennzeichnet, daß die Mittel (10) zum Absperren eines Teils der Kavität (2) ein Schieberelement aufweisen, das zwecks Absperrung in die Kavität (2) hineingeschoben und zwecks Öffnen aus ihr wieder herausgezogen wird.

9. Vorrichtung nach Anspruch 7 oder 8, dadurch gekennzeichnet, daß die Mittel (10) zum Absperren eines Teils der Kavität (2) durch Steuer- oder Regelmittel beeinflußt werden.

10. Vorrichtung nach einem der Ansprüche 7 bis 9, gekennzeichnet durch Heizmittel (11) zum Beheizen des Bereichs der Mittel (10) zum weitgehenden Absperren eines Teils der Kavität (2).
